# EUROPEAN PATENT SPECIFICATION

(11) **EP 2 766 119 B1**
(45) Date of publication and mention of the grant of the patent: **19.03.2025**
(21) Application number: 12838536.6
(22) Date of filing: 04.10.2012
(51) Int. Cl.: B01J 29/80, B01D 53/94, F01N 3/10

(54) **Cu-CHA/Fe-BEA/Fe-MFI MIXED ZEOLITE CATALYST AND PROCESS FOR THE TREATMENT OF NOX IN GAS STREAMS**
CU-CHA/FE-BEA/Fe-MFI MIXED ZEOLITE KATALYSATOR UND-VERFAHREN FÜR DIE BEHANDLUNG VON NOX IN GAS STREAMS
CATALYSEUR ZÉOLITE MIXTE CU-CHA/FE-BEA/Fe-MFI ET PROCÉDÉ POUR LE TRAITEMENT DE NOX DANS DES COURANTS GAZEUX

(30) Priority: 05.10.2011 EP 11183983
(43) Date of publication of application: 20.08.2014
(73) Proprietor: BASF SE, 67056 Ludwigshafen am Rhein (DE)
(72) Inventor: STIEBELS, Susann, 38528 Adenbüttel (DE); ZABEL, Claudia, 30171 Hannover (DE); NEUBAUER, Torsten, 30853 Langenhagen (DE); ZIMMERMANN, Svetlana, 30539 Hannover (DE)
(74) Representative: Altmann Stößel Dick Patentanwälte PartG mbB
(86) International application number: PCT/IB2012/055337
(87) International publication number: WO 2013/050964

(56) References cited:
- WO-A1-2009/099937
- WO-A2-2008/132452
- GB-A- 2 475 740
- JP-A- 2011 125 849
- US-A1- 2003 143 141
- US-A1- 2006 014 630
- US-A1- 2006 014 630
- OLIVER KROCHER ET AL: "Combination of V 2 O 5 /WO 3 -TiO 2 , Fe-ZSM5, and Cu-ZSM5 Catalysts for the Selective Catalytic Reduction of Nitric Oxide with Ammonia", INDUSTRIAL & ENGINEERING CHEMISTRY RESEARCH, vol. 47, no. 22, 19 November 2008 (2008-11-19), pages 8588 - 8593, XP055094103, ISSN: 0888-5885, DOI: 10.1021/ie800951a

## Description

### TECHNICAL FIELD

The present invention relates to a catalyst which is preferably for use in selective catalytic reduction (SCR), as well as to an exhaust gas treatment system comprising said catalyst, and to a process for the treatment of a gas stream comprising NOₓ. In particular, the present invention is concerned with a method of catalyzing the reduction of nitrogen oxides, and especially with the selective reduction of nitrogen oxides with ammonia in the presence of oxygen, using metal-promoted zeolite catalysts.

### BACKGROUND

The emissions present in the exhaust gas of a motor vehicle can be divided into two groups. Thus, the term "primary emission" refers to pollutant gases which form directly through the combustion process of the fuel in the engine and are already present in the untreated emission before it passes through an exhaust gas treatment system. Secondary emission refers to those pollutant gases which can form as by-products in the exhaust gas treatment system.

The exhaust gas of lean engines comprises, as well as the customary primary emissions of carbon monoxide CO, hydrocarbons HC and nitrogen oxides NOₓ, a relatively high oxygen content of up to 15% by volume. In the case of diesel engines, there is additional particulate emission in addition to the gaseous primary emissions, which consists predominantly of soot residues, with or without organic agglomerates, and originates from partially incomplete fuel combustion in the cylinder.

In diesel engine applications, the use of specific diesel particulate filters is unavoidable for the removal of the particulate emissions. Furthermore, complying with the emissions limits prescribed by legislation in Europe and the United States requires nitrogen oxide removal from the exhaust gas ("denitrification"). Thus, although carbon monoxide and hydrocarbon pollutant gases from the lean exhaust gas can easily be rendered harmless by oxidation over a suitable oxidation catalyst, the reduction of the nitrogen oxides to nitrogen is much more difficult owing to the high oxygen content of the exhaust gas stream.

Known methods for removing nitrogen oxides from exhaust gases are firstly methods using nitrogen oxide storage catalysts (NSCs) and secondly methods for selective catalytic reduction (SCR) by means of ammonia over a suitable catalyst, SCR catalyst for short.

The cleaning action of nitrogen oxide storage catalysts is based on the nitrogen oxides being stored in a lean operating phase of the engine by the storage material of the storage catalyst, predominantly in the form of nitrates. When the storage capacity of the NSC is exhausted, the catalyst has to be regenerated in a subsequent rich operating phase of the engine. This means that the nitrates formed beforehand are decomposed and the nitrogen oxides released again are reacted with the reducing exhaust gas components over the storage catalyst to give nitrogen, carbon dioxide and water.

Since the implementation of a rich operating phase in diesel engines is not straightforward and the establishment of the rich exhaust gas conditions required for regeneration of the NSC frequently entails auxiliary measures such as fuel postinjection into the exhaust gas line, the alternative SCR method is preferably used for denitrification of diesel motor vehicle exhaust gases. In this method, according to the engine design and construction of the exhaust gas system, a distinction is made between "active" and "passive" SCR methods, "passive" SCR methods involving use of ammonia secondary emissions generated deliberately in the exhaust gas system as a reducing agent for denitrification.

For example, US 6,345,496 B1 describes a method for cleaning engine exhaust gases, in which repeatedly alternating lean and rich air/fuel mixtures are established and the exhaust gas thus produced is passed through an exhaust gas system which comprises, on the inflow side, a catalyst which converts NOₓ to NH₃ only under rich exhaust gas conditions, while a further catalyst arranged on the outflow side adsorbs or stores NOₓ in the lean exhaust gas, and releases it under rich conditions, such that it can react with NH₃ generated by the inflow-side catalyst to give nitrogen. As an alternative, according to US 6,345,496 B1, an NH₃ adsorption and oxidation catalyst may be arranged on the outflow side, which stores NH₃ under rich conditions, desorbs it under lean conditions and oxidizes it with oxygen to give nitrogen and water. Further disclosures of such methods are known. Like the use of the nitrogen oxide storage catalysts, however, such "passive" SCR methods have the disadvantage that one of their essential constituents is the provision of rich exhaust gas conditions, which are generally required for in situ generation of ammonia as a reducing agent.

Compared to this, in "active" SCR methods, the reducing agent is metered into the exhaust gas line from an addition tank carried in the vehicle by means of an injection nozzle. Such a reducing agent used may, apart from ammonia, also be a compound readily decomposable to ammonia, for example urea or ammonium carbamate. Ammonia has to be supplied to the exhaust gas at least in a stoichiometric ratio relative to the nitrogen oxides. Owing to the greatly varying operation conditions of the motor vehicles, the exact metered addition of the ammonia is not straightforward. This leads in some cases to considerable ammonia breakthroughs downstream of the SCR catalyst. To prevent secondary ammonia emission, an oxidation catalyst is usually arranged downstream of the SCR catalyst, which is intended to oxidize ammonia which breaks through to nitrogen. Such a catalyst is referred to hereinafter as an ammonia slip catalyst.

To remove particulate emissions from the exhaust gas of diesel motor vehicles, specific diesel particulate filters are used, which may be provided with an oxidation catalyst-containing coating to improve their properties. Such a coating serves to lower the activation energy for oxygen-based particulate burnoff (soot combustion) and hence to lower the soot ignition temperature on the filter, to improve the passive regeneration performance by oxidation of nitrogen monoxide present in the exhaust gas to nitrogen dioxide, and to suppress breakthroughs of hydrocarbon and carbon monoxide emissions.

If compliance with legal emissions standards requires both denitrification and removal of particulates from the exhaust gas of diesel motor vehicles, the described measures for removing individual pollutant gases are combined in a corresponding conventional exhaust gas system by connection in series. For example, WO 99/39809 A1 describes an exhaust aftertreatment system wherein an oxidation catalyst for oxidation of NO in NOₓ to NO₂, a particulate filter, a metering unit for a reducing agent and an SCR catalyst follow on each other. To prevent ammonia breakthroughs, an additional ammonia slip catalyst is generally required downstream of the SCR catalyst, and continues the series of catalysts on the outflow side of the SCR catalyst.

In this respect, both synthetic and natural zeolites and their use in promoting certain reactions, including the selective reduction of nitrogen oxides with ammonia in the presence of oxygen, are well known in the art. Zeolites are aluminosilicate crystalline materials having rather uniform pore sizes which, depending upon the type of zeolite and the type and amount of cations included in the zeolite lattice, may range from about 3 to 10 angstroms in diameter.

EP 1 961 933 A1, for example, relates to a diesel particulate filter for treating exhaust gas comprising a filter body having provided thereon an oxidation catalyst coating, an SCR-active coating, and an ammonia storage material. Among the materials which may be used as the catalytically active component in the SCR reaction, said document mentions the use of zeolites selected from beta zeolite, Y-zeolite, faujasite, mordenite and ZSM-5 which may be exchanged with iron or copper.

EP 1 147 801 A1, on the other hand, relates to a process for reducing nitrogen oxides present in a lean exhaust gas from an internal combustion engine by SCR using ammonia, wherein the reduction catalyst preferably contains ZSM-5 zeolite exchanged with copper or iron. Said document further concerns an SCR catalyst having a honeycomb substrate and deposited thereon a coating containing ZSM-5 zeolite exchanged with iron.

EP 2 123 614 A2 for its part concerns a honeycomb structure containing zeolites and an inorganic binder. In particular, a first zeolite included in said structure is ion-exchange with a metal including Cu, Mn, Ag, and V, and a second zeolite is further included which is exchanged with a metal including Fe, Ti, and Co. Regarding the types of zeolites used for the first and second zeolite, these include zeolite beta, zeolite Y, ferrierite, ZSM-5 zeolite, mordenite, faujasite, zeolite A, and zeolite L.

US 7,332,148 B2 describes a stabilized aluminosilicate zeolite containing copper or iron, wherein the stabilized zeolite includes ZSM-5, ZSM-8, ZSM-11, ZSM-12, zeolite X, zeolite Y, zeolite beta, mordenite, and erionite.

WO 2008/106519 A1 describes a zeolite having the CHA crystal structure and containing copper. Said document also discusses the use of such an ion-exchanged zeolite as an SCR catalyst.

EP 1 579 911 A1 discloses an exhaust gas purifying catalyst and a method fur purifying exhaust gas including reducing nitrogen oxides wherein the catalyst component includes ZSM-5 and zeolite beta onto both of which copper has been deposited.

US 2003/0143141 A1 relates to a method for the removal of NOₓ and N₂O from process and waste gases, wherein the catalysts used therein contain one or more iron-loaded zeolites, wherein the iron loaded zeolites are preferably of the types MFI, BEA, FER, MOR, and/or MEL.

WO 2009/099937 A1 relates to catalysts comprising metal-loaded non-zeolitic molecular sieves having the CHA crystal structure, including Cu-SAPO-34, methods for preparing such catalysts, and systems and methods for treating exhaust gas incorporating such catalysts.

GB 2475740 A discloses a catalyst for selectively catalyzing the conversion of oxides of nitrogen using a nitrogenous reductant in a feed gas whose composition, flow rate and temperature are each changeable temporally, which catalyst comprising a combination of a first molecular sieve component and a second molecular sieve component, wherein in a direct comparison tested on the Federal Test Procedure (FTP) 75 cycle the catalyst has a higher cumulative conversion of NO at equal or lower NH3 slip than either molecular sieve component taken alone.

Finally, WO 2004/047960 A1 concerns a method for the preparation of multimetallic zeolite catalysts for N₂O abatement, wherein the catalyst contains isomorphously subtituted iron, and wherein the zeolite catalyst has a structure analogous to MFI and/or BEA.

Accordingly, the prior art relates an awareness of the utility of metal-promoted zeolite catalysts including, among others, iron-promoted and copper-promoted zeolite catalysts, in particular for the selective catalytic reduction of nitrogen oxides with ammonia.

Presently, however, increasingly strict legislature with respect to emissions, and in particular regarding motor vehicle exhaust gas emissions, requires improved catalysts and exhaust treatment systems using such catalysts for the treatment thereof. Thus, exhaust gas emission legislation in the European Union for exhaust gas emission stage Euro 6 now requires reduction of NOₓ emissions for most passenger cars powered by diesel engines. For this purpose, exhaust gas emissions are tested using the New European Driving Cycle (NEDC), also referred to as the MVEG (Motor Vehicle Emissions Group) cycle, which is laid down in European Union Directive 70/220/EEC. One way of meeting this requirement includes the application of SCR catalyst technology to the exhaust gas systems of the vehicles in question.

As opposed to the old European driving cycle (ECE-15) driving cycle, a particular feature of the NEDC is that it integrates a so-called extra-urban driving cycle, such that testing may better represent the typical usage of a car in Europe, and, accordingly, the typical emission pattern linked thereto. More specifically, in the NEDC, the old European driving cycle ECE-15 is performed in the time period of 0 to 800 seconds, after which the extra-urban driving cycle is conducted in the time period up to 1200 seconds.

It is therefore the object of the present invention to provide an improved catalyst, in particular for use in selective catalytic reduction, wherein said catalyst is, for example, better adapted to the actual emission conditions encountered in motor vehicle use, such as for example those encountered in the NEDC.

### DESCRIPTION

In this respect, it has surprisingly been found that according to the present invention as outlined in the following, an improved catalyst may be provided. In particular, it has unexpectedly been found that a catalyst comprising zeolites of the BEA structure type, of the CHA structure type and of the MFI structure type, wherein the BEA-type zeolites and the MFI-type zeolites contain iron and the CHA-type zeolites contain copper, display clearly improved catalytic properties, in particular when used in SCR applications.

Thus, the present invention relates to a catalyst comprising
- a substrate, wherein the substrate is a monolith;
- at least three zeolites provided onto the substrate; wherein the at least three zeolite comprise one or more zeolites of the BEA structure type, one or more zeolites of the CHA structure type, and one or more zeolites of the MFI structure type;

wherein the one or more zeolites of the BEA structure type are present in the catalyst in a loading ranging from 5.74 to 12.3 g/cm³ (0.35 to 0.75 g/in³),
wherein the one or more zeolites of the CHA structure type are present in the catalyst in a loading ranging from 24.59 to 40.98 g/cm³ (1.5 to 2.5 g/in³), and
wherein the one or more zeolites of the MFI structure type are present in the catalyst in a loading ranging from 5.74 to 12.3 g/cm³ (0.35 to 0.75 g/in³),
wherein at least part of the one or more zeolites of the BEA structure type contain iron (Fe), wherein the amount of Fe in the one or more zeolites of the BEA structure type ranges from 0.5 to 2.0 weight-%, based on the weight of said one or more zeolites of the BEA structure type,
wherein at least part of the one or more zeolites of the CHA structure type contain copper (Cu), wherein the amount of Cu in the one or more zeolites of the CHA structure type ranges from 2.5 to 3.5 weight-%, based on the weight of said one or more zeolites of the CHA structure type,
wherein at least part of the one or more zeolites of the MFI structure type contain iron (Fe), wherein the amount of Fe in the one or more zeolites of the MFI structure type ranges from 2.5 to 5.5 weight-%, based on the weight of said one or more zeolites of the MFI structure type,
wherein the catalyst is obtainable according to a process comprising
   (a) providing at least one zeolite of the BEA structure type, at least one further zeolite selected from zeolites of the CHA structure type, and one or more zeolites of the MFI structure type, wherein at least part of the one or more zeolites of the BEA structure type contain iron, wherein at least part of the one or more further zeolites of the CHA structure type contain copper, and wherein at least part of the one or more zeolites of the MFI structure type contain iron;
      wherein the amount of Fe in the one or more zeolites of the BEA structure type ranges from 0.5 to 2.0 weight-%, wherein at least part of the one or more further zeolites of the CHA structure type contain copper, wherein the amount of Cu in the one or more zeolites of the CHA structure type ranges from 2.5 to 3.5 weight-%, and wherein at least part of the one or more zeolites of the MFI structure type contain iron, wherein the amount of Fe in the one or more zeolites of the MFI structure type ranges from 2.5 to 5.5 weight-%;
   (b) preparing one or more washcoat compositions respectively comprising one or more of the zeolites;
   (c) applying the one or more woashcoat compositions in one more respective layers onto a substrate, wherein the substrate is a monolith, for the one or more zeolites of the BEA structure type in a loading ranging from 5.74 to 12.3 g/cm³ (0.35 to 0.75 g/in³), for the one or more zeolites of the CHA structure type in a loading ranging from 24.59 to 40.98 g/cm³ (1.5 to 2.5 g/in³), and for the one or more zeolites of the MFI structure type in a loading ranging from 5.74 to 12.3 g/cm³ (0.35 to 0.75 g/in³), wherein a step of drying is optionally conducted after the respective application of one or more of the individual layers;
   (d) optionally washing and/or drying the coated substrate; and
   (e) subjecting the coated substrate to a calcination process.

Within the meaning of the present invention, the term "selective calatytic reduction" abbreviated as "SCR" refers to any catalytic process involving the reaction of nitrogen oxides NOₓ with a reductant. In particular, SCR refers to reduction reactions, wherein NOₓ is transformed to a reduction product thereof, which is preferably N₂. Regarding the term "reductant", said term refers to any suitable reducing agent for the SCR process, wherein preferably ammonia and/or any ammonia precursor such as urea and/or ammonium carbamate is preferred, urea being preferably comprised in the ammonia precursor. Even more preferably, the term "reductant" refers to ammonia. The term "reductant" may, however, further include hydrocarbons and/or hydrocarbon derivatives such as oxygenated hydrocarbons, such as for example those which may be found in motor vehicle fuels and/or in motor vehicle exhaust gas, in particular in diesel fuel and/or diesel exhaust gas.

According to the present invention, any conceivable zeolite of the BEA or of the CHA structure type may be used, respectively, provided that it displays the typical structural characteristics of that structure-type. With respect to the one or more zeolites of the BEA structure, these may for example comprise one or more zeolites selected from the group consisting of Beta, [B-Si-O]-BEA, [Ga-Si-O]-BEA, [Ti-Si-O]-BEA, Al-rich beta, CIT-6, Tschernichite, pure silica beta and mixtures of two or more thereof. According to preferred embodiments of the present invention, the one or more zeolites of the BEA structure type include zeolite Beta.

Concerning the one or more zeolites of the CHA structure, these may comprise one or more zeolites selected from the group consisting of chabazite, AlP, [Al-As-O]-CHA, [Co-Al-P-O]-CHA, [Mg-Al-P-O]-CHA, [Si-O]-CHA, [Zn-Al-P-O]-CHA, [Zn-As-O]-CHA, ICol[Be-P-O]-CHA, |Li-Na|[Al-Si-O]-CHAO-34, CoAPO-44, CoAPO-47, DAF-5, Dehydrated Na-Chabazite, GaPO-34, K-Chabazite, LZ-218, Linde D, Linde R, MeAPO-47, MeAPSO-47, Ni(deta)₂-UT-6, Phi, SAPO-34, SAPO-47, SSZ-13, SSZ-62, UiO-21, Willhendersonite, ZK-14, ZYT-6, and mixtures of two or more thereof. According to preferred embodiments of the present invention, the one or more zeolites of the CHA structure type comprise one or more zeolites selected from the group consisting of chabazite, SSZ- 13, LZ-218, Linde D, Linde R, Phi, ZK-14, and ZYT-6, and mixtures of two or more thereof, wherein more preferably, the one or more zeolites of the CHA structure type include chabazite.

Furthermore, with respect to embodiments of the present invention comprising one or more zeolites of the MFI structure type, any conceivable zeolite of the MFI structure type may be used, provided that it displays the typical structural characteristics of that structure type. Thus, by way of example, the one or more zeolites of the MFI structure type contained in the inventive catalyst may comprise one or more zeolites selected from the group consisting of ZSM-5, [As-Si-O]-MFI, [Fe-Si-O]-MFI, [Ga-Si-O]-MFI , AMS-1B, AZ-1, Bor-C, Boralite C, Encilite, FZ-1, LZ-105, Monoclinic H-ZSM-5, Mutinaite, NU-4, NU-5, Silicalite, TS-1, TSZ, TSZ-III, TZ-01, USC-4, USI-108, ZBH, ZKQ-1B, ZMQ-TB, organic-free ZSM-5, and mixtures of two or more thereof. According to preferred embodiments of the present invention, the one or more zeolites of the MFI structure type include ZSM-5.

According to embodiments of the present invention which are further preferred, the one or more zeolites of the BEA structure type include zeolite Beta and the one or more zeolites of the CHA structure type comprise one or more zeolites selected from the group consisting of chabazite, SSZ- 13, LZ-218, Linde D, Linde R, Phi, ZK-14, and ZYT-6, and mixtures of two or more thereof, wherein even more preferably, the one or more zeolites of the BEA structure type include zeolite Beta and the one or more zeolites of the CHA structure type include chabazite. According to particularly preferred embodiments, the one or more zeolites of the BEA structure type is zeolite Beta and the one or more zeolites of the CHA structure type is chabazite.

It is yet further preferred that the one or more zeolites of the BEA structure type include zeolite Beta, that the one or more zeolites of the CHA structure type comprise one or more zeolites selected from the group consisting of chabazite, SSZ- 13, LZ-218, Linde D, Linde R, Phi, ZK-14, and ZYT-6, and mixtures of two or more thereof, and that the one or more zeolites of the MFI structure type include ZSM-5. More preferably, the one or more zeolites of the BEA structure type include zeolite Beta, the one or more zeolites of the CHA structure type include chabazite, and the one or more zeolites of the MFI structure type include ZSM-5. According to particularly preferred embodiments thereof, the one or more zeolites of the BEA structure type is zeolite Beta, the one or more zeolites of the CHA structure type is chabazite, and the one or more zeolites of the MFI structure type is ZSM-5.

According to the present invention, at least part of the one or more BEA-type zeolites contain iron and at least part of the one or more CHA-type zeolites contain copper. Furthermore, at least part of the one or more MFI-type zeolites contain iron.

With respect to the iron contained in at least part of the one or more BEA-type zeolites and the copper contained in at least part of the one or more CHA-type zeolites, as well as the iron contained in the one or more MFI-type zeolites contained in the inventive catalyst, said metals may respectively be contained therein in any conceivable fashion and in any conceivable state. Thus, according to the present invention, there is no particular limitation with respect to the oxidation state of iron and copper contained in the catalyst, nor with respect to the way in which they are contained in the respective type of zeolite. Preferably, however, iron and/or copper, and more preferably both iron and copper, respectively display a positive state of oxidation in the respective zeolite. Furthermore, iron and/or copper may be contained on the zeolite surface and/or within the porous structure of the respective zeolite framework. Alternatively or in addition to being supported on the zeolite surface and/or within the porous structure thereof, iron and/or copper may be included in the zeolite framework, for example by isomorphous substitution. According to preferred embodiments, the iron and/or copper, and more preferably both iron and copper, are supported on the respective zeolite surface and/or within the porous structure thereof, and even more preferably both on the respective zeolite surface and within the porous structure thereof. According to particularly preferred embodiments of the present invention, both iron and copper are respectively contained in at least part of the one or more zeolites of the BEA, CHA, and MFI structure type in a positive oxidation state, wherein said iron and copper is supported on the surface of the respective zeolite, including being contained within the porous structure thereof.

The catalyst according to the present invention may comprise the one or more zeolites of the BEA structure type and the one or more zeolites of the CHA structure type in any conceivable weight ratio, wherein it is preferred that the weight ratio of the one or more zeolites of the BEA structure type to the one or more zeolites of the CHA structure type ranges from 0.1 to 10, preferably from 0.2 to 7, more preferably from 0.3 to 4, more preferably from 0.35 to 2, more preferably from 0.4 to 1, more preferably from 0.45 to 0.5, and even more preferably from 0.47 to 0.48. According to particularly preferred embodiments of the present invention, the weight ratio of the BEA-type zeolites to the CHA-type zeolites is about 0.475.

Furthermore, any conceivable weight ratio of said one or more zeolites of the MFI structure type to the one or more zeolites of the CHA structure type and/or to the one or more zeolites of the BEA structure type may be used. According to the present invention it is however preferred that the ratio of the total weight of the one or more zeolites of the BEA structure type and of the one or more zeolites of the MFI structure type to the weight of the one or more zeolites of CHA structure type ranges from 0.1 to 10, preferably from 0.2 to 7, more preferably from 0.3 to 4, more preferably from 0.35 to 2, more preferably from 0.4 to 1, more preferably from 0.45 to 0.5, and even more preferably from 0.47 to 0.48. According to particularly preferred embodiments of the present invention, the ratio of the combined weight of the BEA- and MFI-type zeolites to the CHA-type zeolites is about 0.475.

Thus, according to the present invention, it is preferred that the ratio of the total weight of the one or more zeolites of the BEA structure type and of the one or more zeolites of the MFI structure type to the weight of the one or more of the zeolites of the CHA structure type, ranges from 0.1 to 10, preferably from 0.2 to 7, more preferably from 0.3 to 4, more preferably from 0.35 to 2, more preferably from 0.4 to 1, more preferably from 0.45 to 0.5, and even more preferably from 0.47 to 0.48.

According to the present invention, it is preferred that the one or more zeolites of the BEA structure type and/or the one or more zeolites of the CHA structure type respectively comprise both Al and Si in their frameworks, wherein it is more preferred that both the zeolites of the BEA structure type and the zeolites of the CHA structure type respectively comprise both Al and Si in their frameworks. Furthermore, it is preferred that the one or more zeolites of the CHA, BEA, and MFI structure types respectively comprise both Al and Si in their respective frameworks.

Thus, according to the present invention, it is preferred that one or more of the zeolites, and more preferably all of the zeolites, comprise both Al and Si in their respective zeolite frameworks.

With respect to embodiments of the present invention wherein one or more of the zeolites comprise both Al and Si in their respective frameworks, said zeolites may in principle display any possible ratio of Al to Si. In embodiments of the present invention wherein one or more zeolites of the BEA structure type comprise both Al and Si in their framework, it is however preferred that the molar ratio of silica to alumina (SAR) in the one or more zeolites of the BEA structure type ranges from 5 to 150, more preferably from 15 to 100, more preferably from 20 to 50, more preferably from 23 to 30, and even more preferably from 25 to 27. Furthermore, in embodiments of the present invention wherein one or more zeolites of the CHA structure type comprise both Al and Si in their framework, it is preferred that the SAR in the one or more zeolites of the CHA structure type ranges from 5 to 100, preferably from 10 to 70, more preferably from 20 to 55, more preferably from 25 to 35, and even more preferably from 28 to 32. According to particularly preferred embodiments of the present invention wherein one or more zeolites of both the BEA and the CHA structure type respectively comprise Al and Si in their framework, it is further preferred that the SAR in the one or more BEA-type zeolites ranges from 5 to 150, and the one or more CHA-type zeolites ranges from 5 to 100, more preferably that the SAR in the one or more BEA-type zeolites ranges from 15 to 100, and the one or more CHA-type zeolites ranges from 10 to 70, more preferably that the SAR in the one or more BEA-type zeolites ranges from 20 to 50, and the one or more CHA-type zeolites ranges from 20 to 55,more preferably that the SAR in the one or more BEA-type zeolites ranges from 23 to 30, and the one or more CHA-type zeolites ranges from 25 to 35, and even more preferably that the SAR in the one or more BEA-type zeolites ranges from 25 to 27, and the one or more CHA-type zeolites ranges from 28 to 32.

Furthermore, according to preferred embodiments of the present invention wherein the inventive catalyst comprises one or more zeolites of the MFI structure type comprising Al and Si in their framework, said zeolites may in principle display any possible ratio of Al to Si. Thus, by way of example, the silica to alumina (SAR) ratio in the one or more zeolites of the MFI structure type may range anywhere from 5 to 150, wherein it is preferred that the SAR ranges from 15 to 100, more preferably from 20 to 50, more preferably from 23 to 30, and even more preferably from 25 to 27. Furthermore, according to particularly preferred embodiments thereof wherein the both the MFI and BEA structure type respectively comprise Al and Si in their framework, the SAR of the one or more zeolites of the BEA structure type preferably ranges from 5 to 200, more preferably from 15 to 150, more preferably from 25 to 60, more preferably from 35 to 45, and even more preferably from 38 to 42. According to said particularly preferred embodiments it is yet further preferred that the SAR in the one or more BEA-type zeolites ranges from 5 to 200, and the one or more MFI-type zeolites ranges from 5 to 150, more preferably that the SAR in the one or more BEA-type zeolites ranges from 15 to 150, and the one or more MFI-type zeolites ranges from 15 to 100, more preferably that the SAR in the one or more BEA-type zeolites ranges from 25 to 60, and the one or more MFI-type zeolites ranges from 20 to 50, more preferably that the SAR in the one or more BEA-type zeolites ranges from 35 to 45, and the one or more MFI-type zeolites ranges from 23 to 30, and even more preferably that the SAR in the one or more BEA-type zeolites ranges from 38 to 42, and the one or more MFI-type zeolites ranges from 25 to 27. Therefore, according to particular and preferred embodiments of the present invention, the molar ratio of silica to alumina (SAR) in the one or more zeolites of the BEA structure type ranges from 5 to 200, more preferably from 15 to 150, more preferably from 25 to 60, more preferably from 35 to 45, and even more preferably from 38 to 42.

According to the present invention, the amount of iron contained in the one or more zeolites of the BEA structure type ranges from 0.5 to 2.0 wt.-%, based on the weight of said one or more zeolites of the BEA structure type, and the amount of iron contained in the one or more zeolites of the MFI structure type ranges from 2.5 to 5.5 wt.-%, preferably the one or more zeolites of the BEA structure type ranges from 1 to 1.6 wt.-%, and the one or more zeolites of the MFI structure type ranges from 3.5 to 4.2 wt.-%, and more preferably the one or more zeolites of the BEA structure type ranges from 1.2 to 1.4 wt.-% based on the weight of said one or more zeolites of the BEA structure type, and the one or more zeolites of the MFI structure type ranges from 3.7 to 4.0 wt.-% based on the weight of said one or more zeolites of the MFI structure type.

Therefore, according to the present invention, the catalyst comprises one or more zeolites of the MFI structure type,
wherein the amount of Fe in the one or more zeolites of the BEA structure type ranges from from 0.5 to 2.0 wt.-%, preferably from 1 to 1.6 wt.-%, and more preferably from 1.2 to 1.4 wt.-%, and
wherein the amount of Fe in the one or more zeolites of the MFI structure type ranges from 2.5 to 5.5 wt.-%, preferably from 3.5 to 4.2 wt.-%, and more preferably from 3.7 to 4.0 wt.-%.

According to the present invention, the catalyst further comprises a substrate, onto which the one or more zeolites are provided. In general, the substrate can be made from materials commonly known in the art. For this purpose, porous materials are preferably used as the substrate material, in particular ceramic and ceramic-like materials such as cordierite, α-alumina, an aluminosilicate, cordierite-alumina, silicon carbide, aluminum titanate, silicon nitride, zirconia, mullite, zircon, zircon mullite, zircon silicate, sillimanite, a magnesium silicate, petalite, spodumene, alumina-silica-magnesia and zirconium silicate, as well as porous refractory metals and oxides thereof. According to the present invention, "refractory metal" refers to one or more metals selected from the group consisting of Ti, Zr, Hf, V, Nb, Ta, Cr, Mo, W, and Re. The substrate may also be formed of ceramic fiber composite materials. According to the present invention, the substrate is preferably formed from cordierite, silicon carbide, and/or from aluminum titanate, and even more preferably from cordierite and/or silicon carbide.

The substrates useful for the catalysts of embodiments of the present invention may also be metallic in nature and be composed of one or more metals or metal alloys. The metallic substrates are in a monolithic form. Suitable metallic supports include the heat resistant metals and metal alloys such as titanium and stainless steel as well as other alloys in which iron is a substantial or major component. Such alloys may contain one or more of nickel, chromium and/or aluminum, and the total amount of these metals may advantageously comprise at least 15 wt.-% of the alloy, e.g., 10-25 wt.-% of chromium, 3-8 wt.-% of aluminum and up to 20 wt.-% of nickel. The alloys may also contain small or trace amounts of one or more other metals such as manganese, copper, vanadium, titanium and the like. The surface or the metal substrates may be oxidized at high temperatures, e.g., 1000°C and higher, to improve the resistance to corrosion of the alloys by forming an oxide layer on the surfaces the substrates.

Furthermore, the substrate according to the present invention is a monolith, wherein more preferably the monolith is a flow-through monolith. Suitable substrates include any of those materials typically used for preparing catalysts, and will usually comprise a ceramic or metal honeycomb structure. Accordingly, the monolithic substrate contains fine, parallel gas flow passages extending from an inlet to an outlet face of the substrate, such that passages are open to fluid flow (referred to as honeycomb flow through substrates). The passages, which are essentially straight paths from their fluid inlet to their fluid outlet, are defined by walls onto which the one or more zeolites of the BEA and CHA structure types and of the MFI structure type are respectively disposed, so that the gases flowing through the passages may contact them. The flow passages of the monolithic substrate are thin-walled channels, which can be of any suitable cross-sectional shape and size such as trapezoidal, rectangular, square, sinusoidal, hexagonal, oval, or circular. Such structures may contain up to 900 gas inlet openings (i.e., cells) per square inch of cross section, wherein according to the present invention structures preferably have from 50 to 600 openings per square inch, more preferably from 300 to 500, and even more preferably from 350 to 400.

Thus, the catalyst comprises a substrate which is a monolith, and more preferably a honeycomb substrate, onto which the at least three zeolites are provided.

According to further preferred embodiments of the present invention, the substrate is a wall flow monolith. For these embodiments, the substrate is preferably a honeycomb wall flow filter, wound or packed fiber filter, open-cell foam, or sintered metal filter, wherein wall flow filters are particularly preferred. As for the equally preferred flow through monoliths, useful wall flow substrates have a plurality of fine, substantially parallel gas flow passages extending along the longitudinal axis of the substrate. Typically, each passage is blocked at one end of the substrate body, with alternate passages blocked at opposite end-faces. Particularly preferred wall flow substrates for use in the present invention include thin porous walled honeycomb monoliths, through which a fluid stream may pass without causing too great an increase in back pressure or pressure across the catalyst. Ceramic wall flow substrates used in the present invention are preferably formed of a material having a porosity of at least 40%, preferably from 40 to 70%, and having a mean pore size of at least 5 microns, preferably from 5 to 30 microns. Further preferred are substrates having a porosity of at least 50% and having a mean pore size of at least 10 microns.

Thus, according to the present invention, the substrate preferably comprised in the catalyst is preferably selected from the group consisting of flow-through substrates and wall-flow substrates, more preferably from the group consisting of cordierite flow-through substrates and wall-flow substrates, and silicon carbide flow-through substrates and wall-flow substrates.

In general, according to embodiments of the present invention, the zeolites may be provided on the substrates in any conceivable fashion, wherein they are provided thereon in the form of one or more layers which are washcoat layers. In preferred embodiments of the present invention, wherein the catalyst comprises a substrate and two or more layers provided thereon, the zeolites may be provided in said two or more layers in any possible manner. Accordingly, the present invention includes, for example, such preferred embodiments wherein the zeolites are contained in only a single of the two or more layers, as well as embodiments wherein the zeolite is contained in more than one of the two or more layers. Preferably, however, the zeolites are contained in a single layer, irrespective of the number of layers present on the substrate.

Thus, according to preferred embodiments, it is further preferred that the catalyst comprises one or more layers, preferably washcoat layers, provided on the substrate, the zeolites being contained in one single layer or two or more separate layers, wherein preferably the zeolites are contained in one single layer.

In further embodiments of the present invention comprising a substrate and two or more layers provided thereon, wherein the zeolites are contained in more than one of said layers, there is no particular limitation as to the distribution of the one or more zeolites of the BEA and the CHA structure type among said more than one layers which comprise said zeolites. Thus, it is principally possible according to the present invention, that, for example, the BEA- and CHA-type zeolites are respectively contained in each of the layers which contain zeolites, or that, alternatively, only part of the layers containing zeolites contain both BEA- and CHA-type zeolites. Furthermore, it is possible according to said further embodiments of the present invention that no single layer contains both BEA- and CHA-type zeolites, said zeolites being accordingly contained in separate layers of the catalyst. According to the present invention it is, however, preferred that at least one of the layers in such embodiments contains both BEA- and CHA-type zeolites, wherein it is even more preferred that each of the two or more layers of said embodiments containing the zeolites also contains both the BEA- and CHA-type zeolites.

Furthermore, according to particular embodiments of the present invention, there is no particular limitation as to the distribution of the one or more zeolites of the BEA, CHA, and MFI structure type among the more than one layers which comprise said zeolites in preferred embodiments of the present invention wherein the catalyst comprises a substrate having one or more layers provided thereon. Thus, it is principally possible according to the present invention, that, for example, the BEA-, CHA-, and MFI-type zeolites are respectively contained in each of the layers which contain zeolites, or that, alternatively, only part of the layers containing zeolites contain all three BEA-, CHA-, and MFI-type zeolites. Furthermore, it is possible according to said further embodiments of the present invention that no single layer contains all three BEA-, CHA-, and MFI-type zeolites, one or two of said zeolite types being accordingly contained in separate layers of the catalyst. According to the present invention it is, however, preferred that at least one of the layers in such embodiments contains all three BEA-, CHA-, and MFI-type zeolites, wherein it is even more preferred that each of the two or more layers of said embodiments containing the zeolites also contains all three of the BEA-, CHA-, and MFI-type zeolites.

Thus, according to preferred embodiments of the present invention, the catalyst comprises one or more layers, preferably washcoat layers, provided on the substrate, the zeolites being contained in one single layer or two or more separate layers, wherein preferably the zeolites are contained in one single layer.

The one or more zeolites of the CHA structure type are present in the catalyst in a loading ranging from 24.59 to 40.98 g/cm³ (1.5 to 2.5 g/in³), preferably from 28.69 to 36.88 g/cm³ (1.75 to 2.25 g/in³), and more preferably from 31.15 to 34.43 g/cm³ (1.9 to 2.1 g/in³).

Furthermore, according to the present invention, the total loading of the one or more zeolites of the BEA structure type and the total loading of the one or more zeolites of the MFI structure ranges from 5.74 to 12.3 g/cm³ (0.35 to 0.75 g/in³), preferably from 6.56 to 9.84 g/cm³ (0.4 to 0.6 g/in³), and more preferably from 7.38 to 8.2 g/cm³ (0.45 to 0.5 g/in³). According to a particularly preferred embodiment of the present invention, the one or more zeolites of the BEA structure type as well as the one or more zeolites of the MFI structure type are each contained in the inventive catalyst in a loading of 7.79 g/cm³ (0.475 g/in³), respectively.

In addition to the above-mentioned catalyst, the present invention also relates to a treatment system for an exhaust gas stream. In particular, the treatment system of the present invention comprises an internal combustion engine which is preferably a lean burn engine, and even more preferably a diesel engine. According to the present invention, it is however also possible to use a lean burn gasoline engine in said treatment system.

Furthermore, the treatment system according to the present invention comprises an exhaust gas conduit which is in fluid communication with the internal combustion engine. In this respect, any conceivable conduit may be used, provided that it is capable of conducting exhaust gas from an internal combustion engine, and may sufficiently resist the temperatures and the chemical species encountered in the exhaust gas of an internal combustion engine, in particular of a lean burn engine such as a diesel engine. Within the meaning of the present invention, the fluid communication provided between the exhaust gas conduit and the internal combustion engine signifies that the treatment system allows for the constant passage of exhaust gas from the engine to the conduit.

According to the exhaust gas treatment system of the present invention, the catalyst is present in the exhaust gas conduit. In general, the catalyst may be provided in the exhaust gas conduit in any conceivable fashion, provided that it is present within the exhaust gas conduit in the sense that it may be contacted by the exhaust gas passing through said conduit. Preferably, the catalyst is provided in the exhaust gas conduit on a substrate as outlined in the present application, and in particular on a honeycomb substrate, which is preferably either a flow-through or a wall-flow honeycomb substrate.

Thus, the present invention also relates to an exhaust gas treatment system comprising an internal combustion engine and an exhaust gas conduit in fluid communication with the internal combustion engine, wherein the catalyst according to the present invention is present in the exhaust gas conduit, and wherein the internal combustion engine is preferably a lean burn engine, and more preferably a diesel engine.

In this respect and independently thereof, the present invention also relates to embodiments wherein the inventive catalyst is comprised in an exhaust gas treatment system comprising an internal combustion engine and an exhaust gas conduit in fluid communication with the internal combustion engine, wherein said catalyst is present in the exhaust gas conduit, and wherein the internal combustion engine is preferably a lean burn engine, and more preferably a diesel engine.

According to preferred embodiments of the present invention, the exhaust gas treatment system further comprises a means of introducing a reductant into the exhaust gas stream, wherein said means is located upstream from the inventive BEA/CHA/MFl-zeolite catalyst. In particular, it is preferred that a means of introducing ammonia and/or urea into the exhaust gas conduit is provided. In this respect, any means known to the skilled person may be provided, in particular those commonly applied to exhaust gas treatment systems operating with active SCR methods necessitating the direct introduction of said reductants. According to particularly preferred embodiments, the reductant which preferably comprises ammonia and/or urea is introduced by the means of an injection nozzle provided in the exhaust gas conduit upstream from the inventive catalyst.

Within the meaning of the present invention, the exhaust gas treatment system may suitably further comprise any further components for the effective treatment of an exhaust gas. In particular, said system preferably further comprises an oxidation catalyst or a catalyzed soot filter (CSF) or both an oxidation catalyst and a CSF. According to said embodiments, the oxidation catalyst and/or the CSF are also present within the exhaust gas conduit.

In the present invention, any suitable CSF can be used, provided that it may effectively oxidize soot which may be contained in the exhaust gas. To this effect, the CSF of the present invention preferably comprises a substrate coated with a washcoat layer containing one or more catalysts for burning off trapped soot and/or oxidizing exhaust gas stream emissions. In general, the soot burning catalyst can be any known catalyst for combustion of soot. For example, the CSF can be coated with a one or more high surface area refractory oxides (such as e.g. alumina, silica, silica alumina, zirconia, and zirconia alumina) and/or with an oxidation catalyst (such as e.g. a ceria-zirconia) for the combustion of unburned hydrocarbons and to some degree particulate matter. However, preferably the soot burning catalyst is an oxidation catalyst comprising one or more precious metal catalysts, said one or more precious metal catalysts preferably comprising one or more metals selected from the group consisting of platinum, palladium, and rhodium.

Regarding the oxidation catalyst preferably comprised in the exhaust gas treatment system instead of or in addition to a CSF, any oxidation catalyst may be used to this effect which is suitable for oxidizing unburned hydrocarbons, CO, and/or NOₓ comprised in the exhaust gas. In particular, oxidation catalysts are preferred which comprise one or more precious metal catalysts, and more preferably one or more precious metals selected from the group consisting of platinum, palladium, and rhodium. According to particularly preferred embodiments of the present invention, wherein the internal combustion engine of the exhaust gas treatment system is a diesel engine, the oxidation catalyst is preferably a diesel oxidation catalyst. In particular, within the meaning of the present invention, a "diesel oxidation catalyst" refers to any oxidation catalyst which is particularly well adapted to the oxidation of diesel exhaust gas, in particular with respect to the temperatures and to the composition of diesel exhaust gas encountered in the treatment thereof.

According to particularly preferred embodiments, the exhaust gas treatment system further comprises a CSF, and even more preferably both a CSF and an oxidation catalyst. Even more preferably, the exhaust gas treatment system further comprises a CSF and a diesel oxidation catalyst.

In principle, in embodiments of the exhaust gas treatment system which further comprise an oxidation catalyst and/or a CSF, said further components may be present in the exhaust gas conduit in any order and at any emplacement therein, provided that the effective treatment of an exhaust gas may be provided. In particular, however, the presence and/or order and/or location of said further components may depend on the type, on the state, in particular with respect to the temperature and pressure thereof, and on the average composition of the exhaust gas which is treated. Thus depending on the application of the exhaust gas treatment system, the present invention includes preferred embodiments wherein the oxidation catalyst and/or the CSF are located upstream or downstream from the inventive BEA/CHA/MFl-zeolite catalyst, as well as preferred embodiments comprising both an oxidation catalyst and a CSF, wherein the oxidation catalyst is located upstream and the CSF downstream thereof, or wherein, vice versa, the CSF is located upstream, and the oxidation catalyst downstream thereof. According to particularly preferred embodiments of the present invention, the oxidation catalyst and/or the CSF are located upstream from the inventive BEA/CHA/MFl-zeolite catalyst, wherein even more preferably, the exhaust gas treatment system comprises both an oxidation catalyst and a CSF upstream from the inventive BEA/CHA/MFl-zeolite catalyst. Within the meaning of the present invention, "upstream" and "downstream" relates to the direction of flow of the exhaust gas through the exhaust gas conduit in fluid communication with the internal combustion engine.

Thus, the present invention also relates to an exhaust gas treatment system as defined in the foregoing, said exhaust gas treatment system further comprising an oxidation catalyst and/or a catalyzed soot filter (CSF), wherein the oxidation catalyst and/or the CSF are preferably located upstream from the inventive BEA/CHA/MFl-zeolite catalyst, and wherein the oxidation catalyst is a diesel oxidation catalyst (DOC) in instances where the internal combustion engine is a diesel engine.

Furthermore, as outlined in the foregoing, the exhaust gas treatment system preferably further includes a means of introducing a reductant into the exhaust gas conduit, said means being located upstream from the inventive BEA/CHA/MFl-zeolite catalyst. In particular, said means enables the introduction of a reductant comprising ammonia and/or urea into the exhaust gas conduit. Accordingly, the present invention also relates to an exhaust gas treatment system wherein in addition to or instead of further comprising an oxidation catalyst and/or a catalyzed soot filter (CSF) respectively preferably located upstream from the inventive BEA/CHA/MFl-zeolite catalyst, the oxidation catalyst being a diesel oxidation catalyst (DOC) in instances where the internal combustion engine is a diesel engine, said system further comprises a means of introducing a reductant preferably comprising ammonia and/or urea into the exhaust gas conduit, said means being located upstream of the inventive BEA/CHA/MFI-zeolite catalyst.

According to further preferred embodiments of the present invention, the exhaust gas treatment system further comprises an ammonia slip catalyst located downstream of the BEA/CHA/MFl-zeolite catalyst for oxidizing excess ammonia and/or urea which has not reacted in the SCR. Regarding the preferred ammonia slip catalyst, said catalyst may be provided in the exhaust gas conduit in any manner commonly known in the art, provided that it may effectively oxidize said excess ammonia and/or urea. In particular, said preferred embodiments involve an exhaust gas treatment systems according to the present invention which include a means of introducing a reductant into the exhaust gas conduit as defined in the foregoing.

In addition to a catalyst and to an exhaust gas treatment system comprising said catalyst, the present invention further concerns a process for the treatment of a gas stream comprising NOₓ. In general, in the process of the present invention, any suitable gas stream comprising NOₓ may be employed, provided that its state and composition are both suited for being treated when contacted with a BEA/CHA/MFl-zeolite catalyst according to the present invention, wherein preferably said treatment at least in part involves the selective catalytic reduction of at least part of the NOₓ contained in said gas. For this purpose, the gas stream used in the inventive process preferably contains at least one reductant, which is preferably ammonia and/or any ammonia precursor such as urea and/or ammonium carbamate, urea being preferably comprised in the ammonia precursor. According to further embodiments of the inventive process, however, the gas stream used may also contain hydrocarbons and/or hydrocarbon derivatives such as oxygenated hydrocarbons, such as for example those which may be found in motor vehicle fuels and/or in motor vehicle exhaust gas, in particular in diesel fuel and/or exhaust gas. Said further reductants may be contained in the gas treated in the inventive process either in addition to ammonia, or, according to further embodiments, may also be contained therein instead of ammonia. According to the present invention, it is however particularly preferred that the gas comprises ammonia and/or urea as a reducing agent for the treatment of exhaust gas emissions, in particular via SCR.

Thus, the present invention also relates to a process for the treatment of a gas stream comprising NOₓ as defined in the present application, wherein the gas stream comprises ammonia and/or urea.

Regarding the content of reductant in the gas stream, said reductant preferably comprising ammonia and/or urea, there is no particular limitation in this respect, provided that at least part of the NOₓ in said gas may be reduced by SCR when contacting the BEA/CHA-zeolite catalyst of the present invention. It is however preferred, that said content does not considerably derive from the amount of reductant necessary for the maximal conversion of NOₓ by the catalyst. In this respect, the maximal conversion reflects the maximum amount of NOₓ which may be converted by SCR at a given time point in the inventive process, i.e. relative to the actual state and condition of both the catalyst and the gas to be treated upon contacting thereof, and in particular depending on the content of the reductant and, preferably, depending on the amount of ammonia and/or urea contained therein. Accordingly, the maximal conversion of NOₓ directly reflects the maximum amount of reductant, and preferably of ammonia and/or urea, which may react with NOₓ in the SCR process at a given time point.

According to preferred embodiments of the present invention, the gas stream used in the inventive process is preferably an exhaust gas stream comprising NOₓ. In this respect, there is no particular limitation as to the process which leads to such an exhaust gas stream, provided that it is suited for treatment with the BEA/CHA-zeolite catalyst according to the present invention, or may be processed to a gas stream suited for treatment with such a catalyst. According to the inventive process it is further preferred that the exhaust gas stream is an exhaust gas stream resulting from an internal combustion engine, and even more preferably from a lean burn engine. According to particularly preferred embodiments, the exhaust gas stream is a diesel engine exhaust gas stream.

In the process according to the present invention, the gas stream is contacted with the inventive BEA/CHA/MFl-zeolite catalyst for treatment thereof, wherein said contacting is achieved by either conducting the gas stream over the catalyst, or conducting the gas stream through the catalyst. Said contacting may, however, also be achieved by conducting the gas stream both over and through the inventive catalyst. According to preferred embodiments, the gas stream is either conducted over the catalyst, wherein the catalyst preferably comprises a flow-through substrate for this purpose, or the gas stream is conducted through the catalyst, wherein in this case the catalyst preferably comprises a wall-flow substrate. When using a wall-flow substrate, however, there are instances wherein, depending on the process conditions and the specific form and dimensions of the catalyst, at least a portion of the gas stream may also be conducted over the catalyst. According particularly preferred embodiments of the inventive process, the catalyst used in the inventive process either comprises a wall-flow honeycomb substrate or a flow-through honeycomb substrate.

Thus, the present invention also relates to a process for the treatment of a gas stream comprising NOₓ comprising conducting said gas stream over and/or through an BEA/CHA/MFl-zeolite catalyst according to the present invention, wherein the gas stream is preferably an exhaust gas stream, more preferably an exhaust gas stream resulting from an internal combustion engine, and even more preferably a diesel exhaust gas stream.

In the inventive process, there is no particular limitation as to the amount of NOₓ contained in the gas stream, wherein preferably, the amount thereof in the gas streams used in the inventive process does not exceed 10 wt.-% based on the total weight of the exhaust gas, and more preferably does not exceed 1 wt.-%, more preferably 0.5 wt.-%, more preferably 0.1 wt-%, more preferably 0.05 wt-.%, more preferably 0.03 wt-.%, and even more preferably does not exceed 0.01 wt.-%.

Regarding the specific composition of the NOₓ fraction contained in the gas stream treated in the inventive process, there is no limitation as to the type or to the content of specific nitrous oxide gases NOₓ contained therein. According to specific embodiments of the present invention, it is however preferred that the NO₂-content relative to the total NOₓ-content is 80 wt.-% or less based on 100 wt.-% of NOₓ, wherein more preferably, the NO₂ content is comprised in the range of from 5 to 70 wt.-%, more preferably of from 10 to 60 wt.-%, more preferably of from 15 to 55 wt.-%, and even more preferably of from 20 to 50 wt.-%.

In general, the composition of the gas stream used in the inventive process as defined in the present application refers to the gas stream prior to its use in the inventive process, and in particular prior to the contacting thereof with the catalyst. Preferably, however, said composition refers to the gas stream's composition immediately prior to contacting the catalyst, i.e. immediately before treatment thereof begins by catalyzed chemical conversion thereof.

Thus, the present invention also relates to a process for the treatment of a gas stream comprising NOₓ as defined in the present application, wherein prior to the contacting of the catalyst with the gas stream, the NO₂ content thereof is 80 wt.-% or less based on 100 wt.-% of NOₓ, wherein preferably the NO₂ content is comprised in the range of from 5 to 70 wt.-%, more preferably of from 10 to 60 wt.-%, more preferably of from 15 to 55 wt.-%, and even more preferably of from 20 to 50 wt.-%.

The catalyst according to the present invention can be readily prepared by processes well known in the prior art. A representative process is set forth below. As used herein, the term "washcoat" has its usual meaning in the art of a thin, adherent coating of a catalytic or other material applied to a substrate carrier material, such as a honeycomb-type carrier member, which is preferably sufficiently porous to permit the passage there through of the gas stream being treated.

The several zeolite components of the catalyst may be applied to the substrate as mixtures of one or more components in sequential steps in a manner which will be readily apparent to those skilled in the art of catalyst manufacture. A typical method of manufacturing the catalyst of the present invention is to respectively provide the at least one zeolite of the BEA structure type containing iron (Fe), the at least one further zeolite of the CHA structure type containing copper (Cu), and at least one zeolite of the MFI structure type containing iron (Fe) as a coating or washcoat layer on the walls of a particularly preferred flow-through or wall-flow honeycomb substrate. According to certain preferred embodiments of the present invention, the zeolites are provided in a single washcoat on the substrate.

The catalyst according to the present invention is however preferably prepared by further using at least one binder, wherein any conceivable binder used in the art of catalyst manufacture, and in particular in the art of automotive SCR catalyst manufacture, may be used. In this respect, a silica-alumina binder is for example preferably used for the preparation of the inventive catalyst, wherein said binder may be provided together with one or more of the zeolite components, and is preferably provided together with the zeolite components in one or more coatings on a substrate, more preferably in one or more washcoat layers.

For preparing the inventive catalyst, the components of one or possibly more washcoat layers may respectively be processed to a slurry, preferably to an aqueous slurry. The substrate may then be sequentially immersed into the respective slurries for applying the individual washcoats, after which excess slurry is removed to provide a thin coating of the two or more slurries on the walls of the substrate. The coated substrate is then dried and preferably calcined to provide an adherent coating of the respective component to the walls of the substrate. Thus, for example, after providing a first washcoat layer on the substrate, and preferably drying and/or calcining the coated substrate, the resulting coated substrate may then be immersed into a further slurry to form a second washcoat layer deposited over the first washcoat layer. Again, the substrate may then be dried and/or calcined and eventually coated with a third washcoat, which again may subsequently be dried and/or calcined to provide a finished catalyst in accordance with one embodiment of the present invention. Regarding the steps of drying, washing, and calcining of the catalyst coated in this fashion, these may be respectively performed in the manner well known in the art of catalyst manufacture, in particular regarding the solvents and/or solutions used for washing the coated catalyst, as well as regarding the temperature, duration, and the atmosphere employed in the steps of drying and calcination, respectively. Concerning the step of calcination, any possible temperature may be used therein, provided that the process leads to the desired transformations in the catalyst without causing any notable or substantial deterioration of the catalysts stability, in particular with regard to its use in SCR. Thus, in certain cases, the temperature of calcination will not exceed 700°C, preferably 650°C, more preferably 600°C, and even more preferably will not exceed 550°C. Thus, calcination may for example be conducted at a temperature comprised in the range of from 500°C to 650°C, preferably 550°C to 600°C, more preferably 570°C to 590°C, more preferably , and even more preferably at a temperature comprised in the range of from 575°C to 585°C.

When preparing the inventive catalyst in the above-mentioned manner, it is however preferred that no washing of the washcoat layers is performed after the application and optional drying thereof.

Accordingly, the catalyst of the present invention may be prepared according to a process comprising
(a) providing at least one zeolite of the BEA structure type, at least one further zeolite selected from zeolites of the CHA structure type, and one or more zeolites of the MFI structure type, wherein at least part of the one or more zeolites of the BEA structure type contain iron, wherein at least part of the one or more further zeolites of the CHA structure type contain copper, and wherein at least part of the one or more zeolites of the MFI structure type contain iron;
(b) preparing one or more washcoat compositions respectively comprising one or more of the zeolites;
(c) applying the one or more woashcoat compositions in one more respective layers onto the substrate, wherein a step of drying is optionally conducted after the respective application of one or more of the individual layers;
(d) optionally washing and/or drying the coated substrate, wherein the coated substrate is preferably not washed; and
(e) subjecting the coated substrate to a calcination process.

### Figures

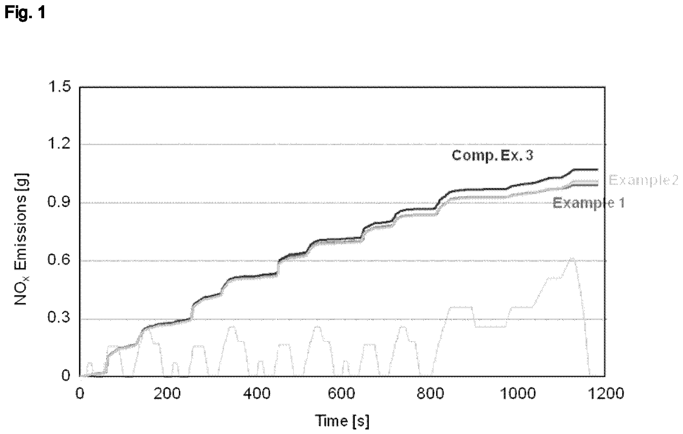

- Figure 1: displays results from NEDC testing of the catalyst compositions according to Example 1, Illustrative Example 2 and Comparative Example 3, respectively, wherein the testing period in seconds is plotted on the x-axis, and the NOₓ emissions in grams NOₓ is plotted on the y-axis, and wherein the background displays the legally prescribed course of NEDC testing over the time period in terms of the variation of the motor vehicle's speed as laid down in the European Union Directive 70/220/EEC.

### Examples

### Example 1

A catalyst composition was prepared comprising 32.79 g/cm³ (2 g/in³) of a zeolite of the CHA structure type, said CHA-type zeolite having a silica to alumina ratio (SAR) of approximately 30 and containing 3 wt.-% of copper based on the total weight of the CHA-type zeolite, 7.79 g/cm³ (0.475 g/in³) of a zeolite of the BEA structure type, said BEA-type zeolite having a silica to alumina ratio of approximately 40 and containing 1.3 wt.-% of iron based on the total weight of the BEA-type zeolite, 7.79 g/cm³ (0.475 g/in³) of a zeolite of the MFI structure type, said MFI-type zeolite having a silica to alumina ratio of approximately 26 and containing 3.8 wt.-% of iron based on the total weight of the MFI-type zeolite and 1.64 g/cm³ (0.1 g/in³) of a zirconyl binder.

### Illustrative Example 2 (*outside the scope of the claims)

A catalyst composition was prepared comprising 32.79 g/cm³ (2 g/in³) of a zeolite of the CHA structure type, said CHA-type zeolite having a silica to alumina ratio (SAR) of approximately 30 and containing 3 wt.-% of copper based on the total weight of the CHA-type zeolite, 15.57 g/cm³ (0.95 g/in³) of a zeolite of the BEA structure type, said BEA-type zeolite having a silica to alumina ratio of approximately 26 and containing 2.3 wt.-% of iron based on the total weight of the BEA-type zeolite, and 1.64 g/cm³ (0.1 g/in³) of a zirconyl binder.

### Comparative Example 3

A catalyst composition was prepared comprising 22.13 g/cm³ (1.35 g/in³) of a zeolite of the CHA structure type, said CHA-type zeolite having a silica to alumina ratio (SAR) of approximately 30 and containing 3 wt.-% of copper based on the total weight of the CHA-type zeolite, 22.13 g/cm³ (1.35 g/in³) of a zeolite of the MFI structure type, said MFI-type zeolite having a silica to alumina ratio of approximately 26 and containing 3.8 wt.-% of iron based on the total weight of the MFI-type zeolite, and 4.92 g/cm³ (0.3 g/in³) of a silica-alumina binder.

### SCR Performance Testing

DeNOₓ Performance of the SCR Catalysts were evaluated in transient conditions using the New European Driving Cycle, also referred to as the MVEG (Motor Vehicle Emissions Group) cycle. In particular, testing conditions were such, that the NOₓ fraction of the exhaust gas stream contained less than 30 wt.-% of NO₂ based on the total NOₓ-content.

For testing, the catalyst compositions according to Example 1, Illustrative Example 2 and Comparative Example 3 were respectively coated onto a 5.66"x5.66"x6" flow-through honeycomb substrate having a volume of 2.5 L, a cell density of 400 cells per square inch, and a wall thickness of approximately 100µm (4 mil). The catalyst samples prepared in this fashion were then tested in an exhaust gas treatment system with a diesel oxidation catalyst (DOC) and a catalyzed soot filter (CSF) respectively located upstream from the tested catalyst.

The results from the NEDC catalyst testing are shown in Figure 1. Thus, as may be taken from said figure, the inventive catalyst according to Example 1 and Illustrative Example 2 which contains a combination of CHA- and BEA-type zeolites displays a clearly improved performance compared to the catalyst sample of Comparative Example 3 which only contains CHA-type zeolite. In particular, when considering the results displayed in Figure 1, wherein the level of NOₓ emissions is plotted as a function of the NEDC testing period, the inventive example 1 and Illustrative Example 2 show a superior conversion performance compared to Comparative Example 3 both during the period from 0 to 800s corresponding to the old European driving cycle (ECE-15), as well as during the testing period from 800 to 1200s, corresponding to the extra-urban part of the driving cycle involving higher space velocity and higher NOₓ mass flow.

Consequently, the catalyst according to the present invention shows a clearly superior performance in SCR compared to a catalyst according to Comparative Example 3, and, as such, is particularly well adapted to the actual driving conditions encountered in motor vehicle use, as reflected in NEDC testing. In particular, these excellent results may be attributed to the use of a specific combination of CHA- and BEA-type zeolite materials as defined by the catalyst of the present invention.

### Cited Prior Art Documents

- US 6,345,496 B1
- WO 99/39809 A1
- EP 1 961 933 A1
- EP 1 147 801 A1
- EP 2 123 614 A2
- US 7,332,148 B2
- WO 2008/106519 A1
- EP 1 579 911 A1
- US 2003/0143141 A1
- WO 2004/047960 A1
- WO 2009/099937 A1
- GB 2475740 A

## Claims

1. A catalyst comprising
- a substrate, wherein the substrate is a monolith;
- -at least three zeolites provided onto the substrate; wherein the at least three zeolites comprise one or more zeolites of the BEA structure type, one or more zeolites of the CHA structure type, and one or more zeolites of the MFI structure type;
wherein the one or more zeolites of the BEA structure type are present in the catalyst in a loading ranging from 5.74 to 12.3 g/cm³ (0.35 to 0.75 g/in³),
wherein the one or more zeolites of the CHA structure type are present in the catalyst in a loading ranging from 24.59 to 40.98 g/cm³ (1.5 to 2.5 g/in³), and
wherein the one or more zeolites of the MFI structure type are present in the catalyst in a loading ranging from 5.74 to 12.3 g/cm³ (0.35 to 0.75 g/in³),
wherein at least part of the one or more zeolites of the BEA structure type contain iron (Fe), wherein the amount of Fe in the one or more zeolites of the BEA structure type ranges from 0.5 to 2.0 weight-%, based on the weight of said one or more zeolites of the BEA structure type,
wherein at least part of the one or more zeolites of the CHA structure type contain copper (Cu), wherein the amount of Cu in the one or more zeolites of the CHA structure type ranges from 2.5 to 3.5 weight-%, based on the weight of said one or more zeolites of the CHA structure type,
wherein at least part of the one or more zeolites of the MFI structure type contain iron (Fe), wherein the amount of Fe in the one or more zeolites of the MFI structure type ranges from 2.5 to 5.5 weight-%, based on the weight of said one or more zeolites of the MFI structure type,
wherein the catalyst is obtainable according to a process comprising
(a) providing at least one zeolite of the BEA structure type, at least one further zeolite selected from zeolites of the CHA structure type, and one or more zeolites of the MFI structure type, wherein at least part of the one or more zeolites of the BEA structure type contain iron, wherein at least part of the one or more further zeolites of the CHA structure type contain copper, and wherein at least part of the one or more zeolites of the MFI structure type contain iron;
wherein the amount of Fe in the one or more zeolites of the BEA structure type ranges from 0.5 to 2.0 weight-%, wherein at least part of the one or more further zeolites of the CHA structure type contain copper, wherein the amount of Cu in the one or more zeolites of the CHA structure type ranges from 2.5 to 3.5 weight-%, and wherein at least part of the one or more zeolites of the MFI structure type contain iron, wherein the amount of Fe in the one or more zeolites of the MFI structure type ranges from 2.5 to 5.5 weight-%;
(b) preparing one or more washcoat compositions respectively comprising one or more of the zeolites;
(c) applying the one or more woashcoat compositions in one more respective layers onto a substrate, wherein the substrate is a monolith, for the one or more zeolites of the BEA structure type in a loading ranging from 5.74 to 12.3 g/cm³ (0.35 to 0.75 g/in³), for the one or more zeolites of the CHA structure type in a loading ranging from 24.59 to 40.98 g/cm³ (1.5 to 2.5 g/in³), and for the one or more zeolites of the MFI structure type in a loading ranging from 5.74 to 12.3 g/cm³ (0.35 to 0.75 g/in³), wherein a step of drying is optionally conducted after the respective application of one or more of the individual layers;
(d) optionally washing and/or drying the coated substrate; and
(e) subjecting the coated substrate to a calcination process.

2. The catalyst of claim 1, wherein the weight ratio of the total weight of the one or more zeolites of the BEA structure type and of the one or more zeolites of the MFI structure type to the weight of the one or more of the zeolites of the CHA structure type, ranges from 0.4 to 1.

3. The catalyst of claim 1 or 2, wherein one or more of the zeolites of the BEA structure type, one or more zeolites of the MFI structure type, and one or more zeolites of the CHA structure type comprise both Al and Si in their respective zeolite frameworks.

4. The catalyst of claim 3, wherein the molar ratio of silica to alumina (SAR) in the one or more zeolites of the MFI structure type ranges from 5 to 150.

5. The catalyst of claim 3 or 4, wherein the molar ratio of silica to alumina (SAR) in the one or more zeolites of the BEA structure type ranges from 5 to 200.

6. The catalyst of any of claims 3 to 5, wherein the molar ratio of silica to alumina (SAR) in the one or more zeolites of the CHA structure type ranges from 5 to 100.

7. The catalyst of any one of claims 1 to 6, wherein the amount of Fe in the one or more zeolites of the BEA structure type ranges from 1 to 1.6 wt.-% based on the weight of said one or more zeolites of the BEA structure type, and
wherein the amount of Fe in the one or more zeolites of the MFI structure type ranges from 3.5 to 4.2 wt.-% based on the weight of said one or more zeolites of the MFI structure type.

8. The catalyst of any of claims 1 to 7, wherein the amount of Cu in the one or more zeolites of the CHA structure type ranges from 2.7 to 3.3 wt.-% based on the weight of said one or more zeolites of the CHA structure type.

9. The catalyst of any one of claims 1 to 8, wherein the substrate is selected from the group consisting of flow-through substrates and wall-flow substrates.

10. The catalyst of claim 9, wherein the catalyst comprises one or more layers provided on the substrate, the zeolites being contained in one single layer or two or more separate layers.

11. The catalyst of any of claims 1 to 10, wherein the one or more zeolites of the CHA structure type are present in the catalyst in a loading ranging from 28.69 to 36.88 g/cm³ (1.75 to 2.25 g/in³).

12. An exhaust gas treatment system comprising an internal combustion engine and an exhaust gas conduit in fluid communication with the internal combustion engine, wherein a catalyst according to any of claims 1 to 11 is present in the exhaust gas conduit.

13. The exhaust gas treatment system of claim 12, said exhaust gas treatment system further comprising an oxidation catalyst and/or a catalyzed soot filter (CSF), and wherein the oxidation catalyst is a diesel oxidation catalyst (DOC) in instances where the internal combustion engine is a diesel engine.

14. A process for the treatment of a gas stream comprising NOₓ comprising conducting said gas stream over and/or through a catalyst according to any one of claims 1 to 11.

15. The process for the treatment of a gas stream comprising NOₓ according to claim 14, wherein the gas stream comprises ammonia and/or urea.

16. The process for the treatment of a gas stream comprising NOₓ according to claim 14 or 15, wherein prior to the contacting of the catalyst with the gas stream, the NO₂ content thereof is 80 wt.-% or less based on 100 wt.-% of NOₓ.

## Patentansprüche

1. Katalysator, umfassend
- ein Substrat, wobei das Substrat ein Monolith ist;
- - mindestens drei Zeolithe, die auf dem Substrat bereitgestellt sind; wobei die mindestens drei Zeolithe einen oder mehrere Zeolithe des Strukturtyps BEA, einen oder mehrere Zeolithe des Strukturtyps CHA und einen oder mehrere Zeolithe des Strukturtyps MFI umfassen;
wobei der eine oder die mehreren Zeolithe des Strukturtyps BEA in dem Katalysator in einer Beladung in einem Bereich von 5,74 bis 12,3 g/cm³ (0,35 bis 0,75 g/Zoll³) vorhanden sind,
wobei der eine oder die mehreren Zeolithe des Strukturtyps CHA in dem Katalysator in einer Beladung in einem Bereich von 24,59 bis 40,98 g/cm³ (1,5 bis 2,5 g/Zoll³) vorhanden sind und
wobei der eine oder die mehreren Zeolithe des Strukturtyps MFI in dem Katalysator in einer Beladung in einem Bereich von 5,74 bis 12,3 g/cm³ (0,35 bis 0,75 g/Zoll³) vorhanden sind,
wobei mindestens ein Teil des einen oder der mehreren Zeolithe des Strukturtyps BEA Eisen (Fe) enthält, wobei die Menge von Fe in dem einen oder den mehreren Zeolithen des Strukturtyps BEA in einem Bereich von 0,5 bis 2,0 Gew.-% liegt, basierend auf dem Gewicht des einen oder der mehreren Zeolithe des Strukturtyps BEA,
wobei mindestens ein Teil des einen oder der mehreren Zeolithe des Strukturtyps CHA Kupfer (Cu) enthält, wobei die Menge von Cu in dem einen oder den mehreren Zeolithen des Strukturtyps CHA in einem Bereich von 2,5 bis 3,5 Gew.-% liegt, basierend auf dem Gewicht des einen oder der mehreren Zeolithe des Strukturtyps CHA,
wobei mindestens ein Teil des einen oder der mehreren Zeolithe des Strukturtyps MFI Eisen (Fe) enthält, wobei die Menge von Fe in dem einen oder den mehreren Zeolithen des Strukturtyps MFI in einem Bereich von 2,5 bis 5,5 Gew.-% liegt, basierend auf dem Gewicht des einen oder der mehreren Zeolithe des Strukturtyps MFI,
wobei der Katalysator nach einem Verfahren erhältlich ist, umfassend
(a) Bereitstellen von mindestens einem Zeolithen des Strukturtyps BEA, mindestens einem weiteren Zeolithen, ausgewählt aus Zeolithen des Strukturtyps CHA, und einem oder mehreren Zeolithen des Strukturtyps MFI, wobei mindestens ein Teil des einen oder der mehreren Zeolithe des Strukturtyps BEA Eisen enthält, wobei mindestens ein Teil des einen oder der mehreren weiteren Zeolithe des Strukturtyps CHA Kupfer enthält, und wobei mindestens ein Teil des einen oder der mehreren Zeolithe des Strukturtyps MFI Eisen enthält;
wobei die Menge von Fe in dem einen oder den mehreren Zeolithen des Strukturtyps BEA in einem Bereich von 0,5 bis 2,0 Gew.-% liegt, wobei mindestens ein Teil des einen oder der mehreren weiteren Zeolithe des Strukturtyps CHA Kupfer enthält, wobei die Menge von Cu in dem einen oder den mehreren Zeolithen des Strukturtyps CHA in einem Bereich von 2,5 bis 3,5 Gew.-% liegt, und wobei mindestens ein Teil des einen oder der mehreren Zeolithe des Strukturtyps MFI Eisen enthält, wobei die Menge von Fe in dem einen oder den mehreren Zeolithen des Strukturtyps MFI in einem Bereich von 2,5 bis 5,5 Gew.-% liegt;
(b) Herstellen einer oder mehrerer Washcoat-Zusammensetzungen, jeweils umfassend einen oder mehrere der Zeolithe;
(c) Aufbringen der einen oder der mehreren Washcoat-Zusammensetzungen in einer oder mehreren jeweiligen Schichten auf ein Substrat, wobei das Substrat ein Monolith ist, für den einen oder die mehreren Zeolithe des Strukturtyps BEA in einer Beladung in einem Bereich von 5,74 bis 12,3 g/cm³ (0,35 bis 0,75 g/Zoll³), für den einen oder die mehreren Zeolithe des Strukturtyps CHA in einer Beladung von 24,59 bis 40,98 g/cm³ (1,5 bis 2,5 g/Zoll³) und für den einen oder die mehreren Zeolithe des Strukturtyps MFI in einer Beladung von 5,74 bis 12,3 g/cm³ (0,35 bis 0,75 g/Zoll³), wobei optional nach dem jeweiligen Aufbringen einer oder mehrerer der Einzelschichten ein Trocknungsschritt durchgeführt wird;
(d) optional Waschen und/oder Trocknen des beschichteten Substrats; und
(e) Unterziehen des beschichteten Substrats einem Kalzinierungsverfahren.

2. Katalysator nach Anspruch 1, wobei das Gewichtsverhältnis des Gesamtgewichts des einen oder der mehreren Zeolithe des Strukturtyps BEA und des einen oder der mehreren Zeolithe des Strukturtyps MFI zu dem Gewicht des einen oder der mehreren Zeolithe des Strukturtyps CHA in einem Bereich von 0,4 bis 1 liegt.

3. Katalysator nach Anspruch 1 oder 2, wobei einer oder mehrere der Zeolithe des Strukturtyps BEA, einer oder mehrere Zeolithe des Strukturtyps MFI und einer oder mehrere Zeolithe des Strukturtyps CHA sowohl Al als auch Si in ihren jeweiligen Zeolithgerüsten umfassen.

4. Katalysator nach Anspruch 3, wobei das Molverhältnis von Siliciumdioxid zu Aluminiumoxid (SAR) in dem einen oder den mehreren Zeolithen des Strukturtyps MFI in einem Bereich von 5 bis 150 liegt.

5. Katalysator nach Anspruch 3 oder 4, wobei das Molverhältnis von Siliciumdioxid zu Aluminiumoxid (SAR) in dem einen oder den mehreren Zeolithen des Strukturtyps BEA in einem Bereich von 5 bis 200 liegt.

6. Katalysator nach einem der Ansprüche 3 bis 5, wobei das Molverhältnis von Siliciumdioxid zu Aluminiumoxid (SAR) in dem einen oder den mehreren Zeolithen des Strukturtyps CHA in einem Bereich von 5 bis 100 liegt.

7. Katalysator nach einem der Ansprüche 1 bis 6, wobei die Menge von Fe in dem einen oder den mehreren Zeolithen des Strukturtyps BEA in einem Bereich von 1 bis 1,6 Gew.-% liegt, basierend auf dem Gewicht des einen oder der mehreren Zeolithe des Strukturtyps BEA, und
wobei die Menge von Fe in dem einen oder den mehreren Zeolithen des Strukturtyps MFI in einem Bereich von 3,5 bis 4,2 Gew.-% liegt, basierend auf dem Gewicht des einen oder der mehreren Zeolithe des Strukturtyps MFI.

8. Katalysator nach einem der Ansprüche 1 bis 7, wobei die Menge von Cu in dem einen oder den mehreren Zeolithen des Strukturtyps CHA in einem Bereich von 2,7 bis 3,3 Gew.-% liegt, basierend auf dem Gewicht des einen oder der mehreren Zeolithe des Strukturtyps CHA.

9. Katalysator nach einem der Ansprüche 1 bis 8, wobei das Substrat aus der Gruppe ausgewählt ist, bestehend aus Durchströmungssubstraten und Wandströmungssubstraten.

10. Katalysator nach Anspruch 9, wobei der Katalysator eine oder mehrere Schichten umfasst, die auf dem Substrat bereitgestellt sind, wobei die Zeolithe in einer einzigen Schicht oder zwei oder mehreren getrennten Schichten enthalten sind.

11. Katalysator nach einem der Ansprüche 1 bis 10, wobei der eine oder die mehreren Zeolithe des Strukturtyps CHA in einer Beladung in einem Bereich von 28,69 bis 36,88 g/cm³ (1,75 bis 2,25 g/Zoll³) in dem Katalysator vorhanden sind.

12. Abgasbehandlungssystem, umfassend einen Verbrennungsmotor und eine Abgasleitung in Fluidverbindung mit dem Verbrennungsmotor, wobei ein Katalysator nach einem der Ansprüche 1 bis 11 in der Abgasleitung vorhanden ist.

13. Abgasbehandlungssystem nach Anspruch 12, das Abgasbehandlungssystem ferner umfassend einen Oxidationskatalysator und/oder einen katalysierten Rußfilter (CSF) und wobei der Oxidationskatalysator in Fällen, in denen der Verbrennungsmotor ein Dieselmotor ist, ein Dieseloxidationskatalysator (DOC) ist.

14. Verfahren für die Behandlung eines Gasstroms, umfassend NO_{X}, umfassend ein Leiten des Gasstroms über und/oder durch einen Katalysator nach einem der Ansprüche 1 bis 11.

15. Verfahren für die Behandlung eines Gasstroms, umfassend NO_{X} nach Anspruch 14, wobei der Gasstrom Ammoniak und/oder Harnstoff umfasst.

16. Verfahren für die Behandlung eines Gasstroms, umfassend NO_{X} nach Anspruch 14 oder 15, wobei vor dem Inkontaktbringen des Katalysators mit dem Gasstrom, der NO₂-Gehalt davon 80 Gew.-% oder weniger beträgt, basierend auf 100 Gew.-% NO_{X}.

## Revendications

1. Catalyseur comprenant
- un substrat, dans lequel le substrat est un monolithe ;
- -au moins trois zéolites fournies sur le substrat ; dans lequel les au moins trois zéolites comprennent une ou plusieurs zéolites du type de structure BEA, une ou plusieurs zéolites du type de structure CHA, et une ou plusieurs zéolites du type de structure MFI ;
dans lequel la ou les zéolites du type de structure BEA sont présentes dans le catalyseur à un chargement allant de 5,74 à 12,3 g/cm³ (0,35 à 0,75 g/po³),
dans lequel la ou les zéolites du type de structure CHA sont présentes dans le catalyseur à un chargement allant de 24,59 à 40,98 g/cm³ (1,5 à 2,5 g/po³), et
dans lequel la ou les zéolites du type de structure MFI sont présentes dans le catalyseur à un chargement allant de 5,74 à 12,3 g/cm³ (0,35 à 0,75 g/po³),
dans lequel au moins une partie de la ou des zéolites du type de structure BEA contiennent du fer (Fe), dans lequel la quantité de Fe dans la ou les zéolites du type de structure BEA va de 0,5 à 2,0 % en poids, en fonction du poids de ladite ou desdites zéolites du type de structure BEA,
dans lequel au moins une partie de la ou des zéolites du type de structure CHA contiennent du cuivre (Cu), dans lequel la quantité de Cu dans la ou les zéolites du type de structure CHA va de 2,5 à 3,5 % en poids, en fonction du poids de ladite ou desdites zéolites du type de structure CHA,
dans lequel au moins une partie de la ou des zéolites du type de structure MFI contiennent du fer (Fe), dans lequel la quantité de Fe dans la ou les zéolites du type de structure MFI va de 2,5 à 5,5 % en poids, en fonction du poids de ladite ou desdites zéolites du type de structure MFI,
dans lequel le catalyseur peut être obtenu selon un procédé comprenant
(a) la fourniture d'au moins une zéolite du type de structure BEA, d'au moins une zéolite supplémentaire choisie parmi des zéolites du type de structure CHA, et d'une ou de plusieurs zéolites du type de structure MFI, dans lequel au moins une partie de la ou des zéolites du type de structure BEA contiennent du fer, dans lequel au moins une partie de la ou des zéolites supplémentaires du type de structure CHA contiennent du cuivre, et dans lequel au moins une partie de la ou des zéolites du type de structure MFI contiennent du fer ;
dans lequel la quantité de Fe dans la ou les zéolites du type de structure BEA va de 0,5 à 2,0 % en poids, dans lequel au moins une partie de la ou des zéolites supplémentaires du type de structure CHA contiennent du cuivre, dans lequel la quantité de Cu dans la ou les zéolites du type de structure CHA va de 2,5 à 3,5 % en poids, et dans lequel au moins une partie de la ou des zéolites du type de structure MFI contiennent du fer, dans lequel la quantité de Fe dans la ou les zéolites du type de structure MFI va de 2,5 à 5,5 % en poids ;
(b) la préparation d'une ou de plusieurs compositions de washcoat comprenant respectivement une ou plusieurs des zéolites ;
(c) l'application de la ou des compositions de washcoat en une ou plusieurs couches respectives sur un substrat, dans lequel le substrat est un monolithe, pour la ou les zéolites du type de structure BEA à un chargement allant de 5,74 à 12,3 g/cm³ (0,35 à 0,75 g/po³), pour la ou les zéolites du type de structure CHA à un chargement allant de 24,59 à 40,98 g/cm³ (1,5 à 2,5 g/po³), et pour la ou les zéolites du type de structure MFI à un chargement allant de 5,74 à 12,3 g/cm³ (0,35 à 0,75 g/po³), dans lequel une étape de séchage est éventuellement effectuée après l'application respective d'une ou de plusieurs des couches individuelles ;
(d) éventuellement le lavage et/ou le séchage du substrat revêtu ; et
(e) la soumission du substrat revêtu à un processus de calcination.

2. Catalyseur selon la revendication 1, dans lequel le rapport pondéral du poids total de la ou des zéolites du type de structure BEA et de la ou des zéolites du type de structure MFI au poids de celle ou de celles des zéolites du type de structure CHA, va de 0,4 à 1.

3. Catalyseur selon la revendication 1 ou 2, dans lequel une ou plusieurs des zéolites du type de structure BEA, une ou plusieurs zéolites du type de structure MFI, et une ou plusieurs zéolites du type de structure CHA comprennent à la fois Al et Si dans leurs réseaux zéolitiques respectifs.

4. Catalyseur selon la revendication 3, dans lequel le rapport molaire de la silice à l'alumine (SAR) dans la ou les zéolites du type de structure MFI va de 5 à 150.

5. Catalyseur selon la revendication 3 ou 4, dans lequel le rapport molaire de la silice à l'alumine (SAR) dans la ou les zéolites du type de structure BEA va de 5 à 200.

6. Catalyseur selon l'une quelconque des revendications 3 à 5, dans lequel le rapport molaire de la silice à l'alumine (SAR) dans la ou les zéolites du type de structure CHA va de 5 à 100.

7. Catalyseur selon l'une quelconque des revendications 1 à 6, dans lequel la quantité de Fe dans la ou les zéolites du type de structure BEA va de 1 à 1,6 % en poids en fonction du poids de ladite ou desdites zéolites du type de structure BEA, et
dans lequel la quantité de Fe dans la ou les zéolites du type de structure MFI va de 3,5 à 4,2 % en poids en fonction du poids de ladite ou desdites zéolites du type de structure MFI.

8. Catalyseur selon l'une quelconque des revendications 1 à 7, dans lequel la quantité de Cu dans la ou les zéolites du type de structure CHA va de 2,7 à 3,3 % en poids en fonction du poids de ladite ou desdites zéolites du type de structure CHA.

9. Catalyseur selon l'une quelconque des revendications 1 à 8, dans lequel le substrat est choisi dans le groupe constitué de substrats à écoulement traversant et de substrats à écoulement sur paroi.

10. Catalyseur selon la revendication 9, dans lequel le catalyseur comprend une ou plusieurs couches fournies sur le substrat, les zéolites étant contenues dans une couche unique ou dans deux couches séparées ou plus.

11. Catalyseur selon l'une quelconque des revendications 1 à 10, dans lequel la ou les zéolites du type de structure CHA sont présentes dans le catalyseur à un chargement allant de 28,69 à 36,88 g/cm³ (1,75 à 2,25 g/po³).

12. Système de traitement de gaz d'échappement comprenant un moteur à combustion interne et un conduit de gaz d'échappement en communication fluidique avec le moteur à combustion interne, dans lequel un catalyseur selon l'une quelconque des revendications 1 à 11 est présent dans le conduit de gaz d'échappement.

13. Système de traitement de gaz d'échappement selon la revendication 12, ledit système de traitement de gaz d'échappement comprenant en outre un catalyseur d'oxydation et/ou un filtre à suie catalysé (CSF), et dans lequel le catalyseur d'oxydation est un catalyseur d'oxydation diesel (DOC) dans des cas où le moteur à combustion interne est un moteur diesel.

14. Procédé destiné au traitement d'un courant gazeux comprenant des NOₓ comprenant le fait de conduire ledit courant gazeux par-dessus et/ou à travers un catalyseur selon l'une quelconque des revendications 1 à 11.

15. Procédé destiné au traitement d'un courant gazeux comprenant des NOₓ selon la revendication 14, dans lequel le courant gazeux comprend de l'ammoniac et/ou de l'urée.

16. Procédé destiné au traitement d'un courant gazeux comprenant des NOₓ selon la revendication 14 ou 15, dans lequel, avant la mise en contact du catalyseur avec le courant gazeux, la teneur en NO₂ de celui-ci est de 80 % en poids ou moins en fonction de 100 % en poids de NOₓ.
